Europäisches Patentamt

European Patent Office

Office européen des brevets

(11) Publication number: **0 393 971**
**A2**

# EUROPEAN PATENT APPLICATION

(21) Application number: 90304083.0

(22) Date of filing: 17.04.90

(51) Int. Cl.⁵: **B60F 1/04, B60S 9/14, B61K 5/02**

(30) Priority: **15.04.89 GB 8908573**

(43) Date of publication of application:
**24.10.90 Bulletin 90/43**

(84) Designated Contracting States:
**BE DE ES FR IT SE**

(71) Applicant: **The Permanent Way Equipment Company Limited**
**Giltway**
**Giltbrook Nottingham, NG6 2GQ(GB)**

(72) Inventor: **Randall, Bryce Ernest**
**Glenbrook House Clayworth**
**Retford Nottingham, DN22 9AD(GB)**
Inventor: **Saint, Glenn Craig**
**10 Vernon Crescent Ravenshead**
**Nottingham, NG15 9BH(GB)**

(74) Representative: **Gilding, Martin John et al**
**Eric Potter & Clarkson St. Mary's Court St.**
**Mary's Gate**
**Nottingham NG1 1LE(GB)**

(54) **Means for side shifting road/rail vehicles.**

(57) A vehicle 16 has a series of sideways moving slideways 15 each fitted with a lifting actuator 9 and 10 interconnected and interlinked by a control means (hydraulic valves 12, 13 and 14) such that any one, any pair or any combination may be actuated in order (when the vehicle is raised) that said vehicle may be moved from side to side or in limited arcuate motion, said control also being so interlocked and interconnected as to prevent inappropriate movement of said lifting actuators.

EP 0 393 971 A2

## MEANS FOR SIDE SHIFTING ROAD/RAIL VEHICLES

This invention relates to a vehicle side shifting device.

Road/Rail load carrying vehicles have been known for some time to have an ability to enable them to be "on tracked" usually by means of a lowering turntable which is sometimes equipped with a limited "side shift" facility, our patent application No. 8726559 (Publication No. GB-A-2212124) refers to such a system. However, such turntables are of necessity heavy, occupy quite large volume and are normally positioned to project downward into the zone known as the hump clearance zone of the vehicle which is undesirable.

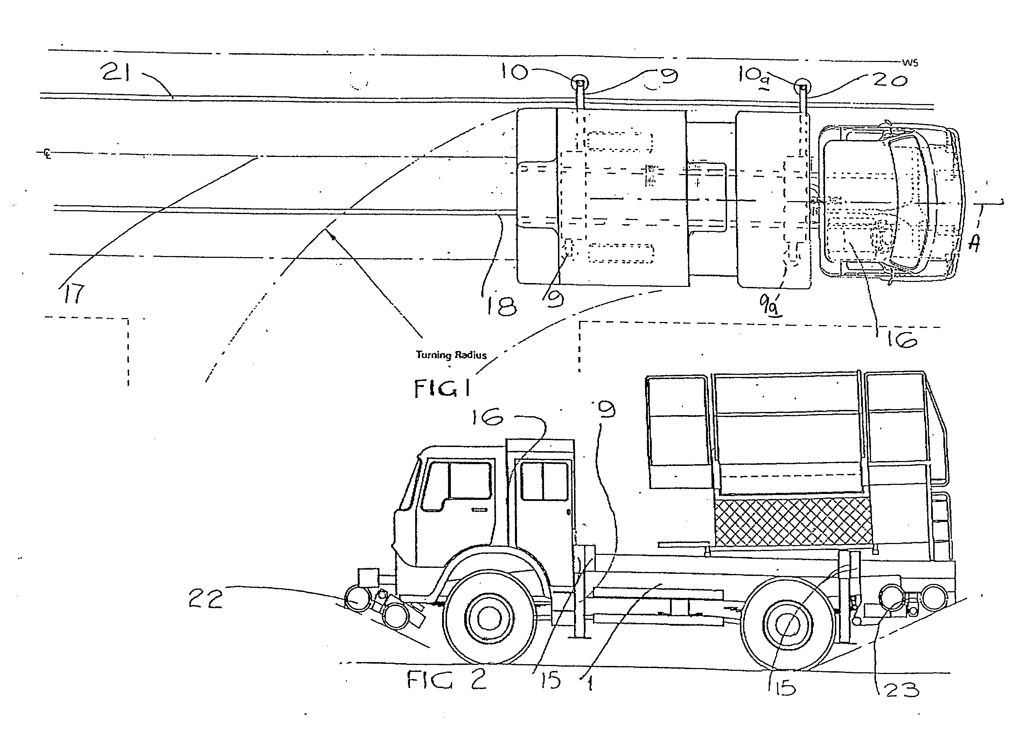

Since road/rail vehicles are required to gain access to the railway track via difficult terrain, embankments, cuttings and the like it follows that approach humps and retreat angles (see Figure 2) should be as large as possible. Similarly, as the railway track is invariably uneven, any structure required to lift and position a vehicle from such surfaces must be strong and stiff which is very difficult to achieve with a centrally positioned turntable or the like.

According to one aspect of the present invention there is provided a series (normally four) of telescopic power operated slideways rigidly attached in pairs and to the chassis of the carrying vehicle such that their axes of extension arc in the plane of but perpendicular to the longitudinal axis of said chassis and having rigidly attached to the outward end of each said slideway a power operated lifting actuator, and to the inward end each slideway has attached a power operated extension actuator. Each actuator is interlinked and controlled such that any one, any pair or any combination may be operated and actuation take place in order to cause either said slideway and lifting actuators combination to move, or with lifting actuators in contact with the ground the mounting vehicle to move bodily sideways or in limited arcuate motion. Similarly interlock control should preferably apply to the actuators in order to prevent inadvertent or inappropriate activation.

According to another aspect the invention may provide a vehicle as set out in Claim 1.

A specific embodiment of the invention will now be described by way of explanation with reference to the accompanying drawings in which:

Figure 1 shows a plan view of a road/rail vehicle in position to being "on tracking";

Figure 2 shows a side view of a road/rail vehicle in road running mode;

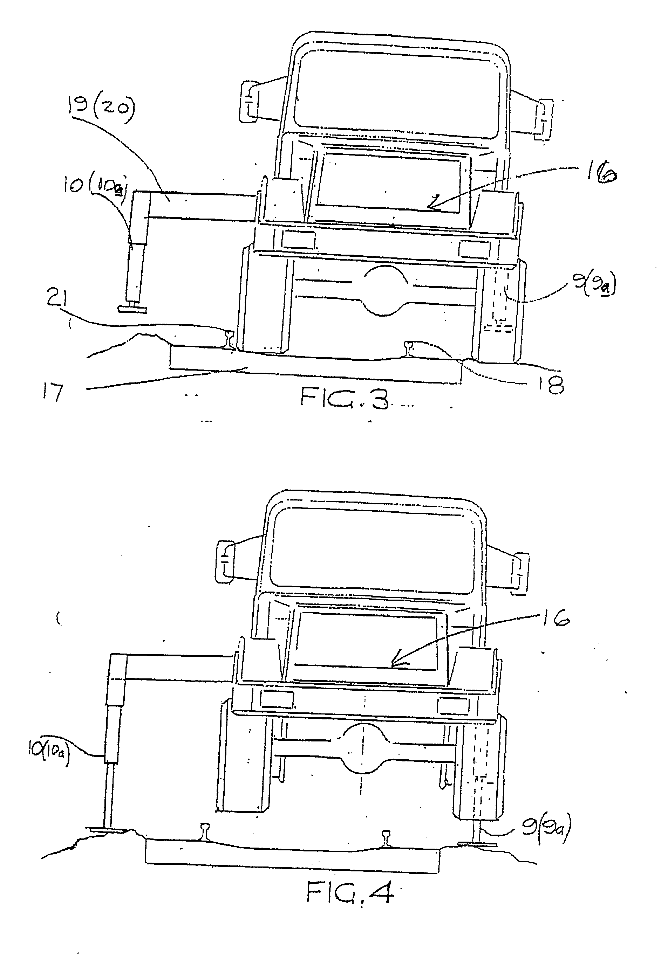

Figure 3 shows a front view of said vehicle with one set of slideways extended ready to begin lift actuator cycle;

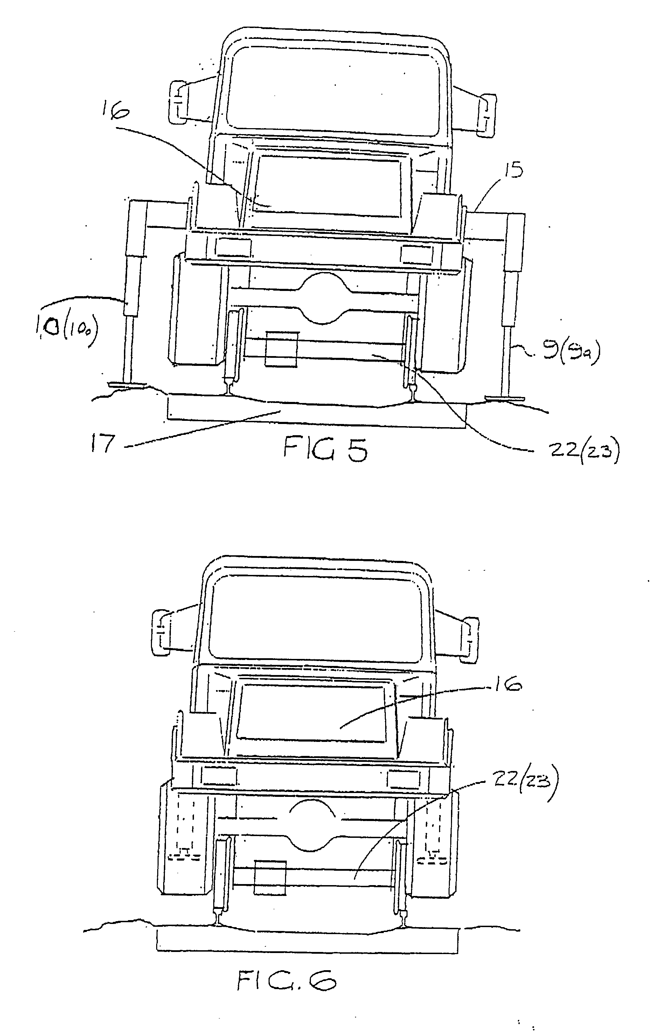

Figure 4 shows a front view of said vehicle lifted;

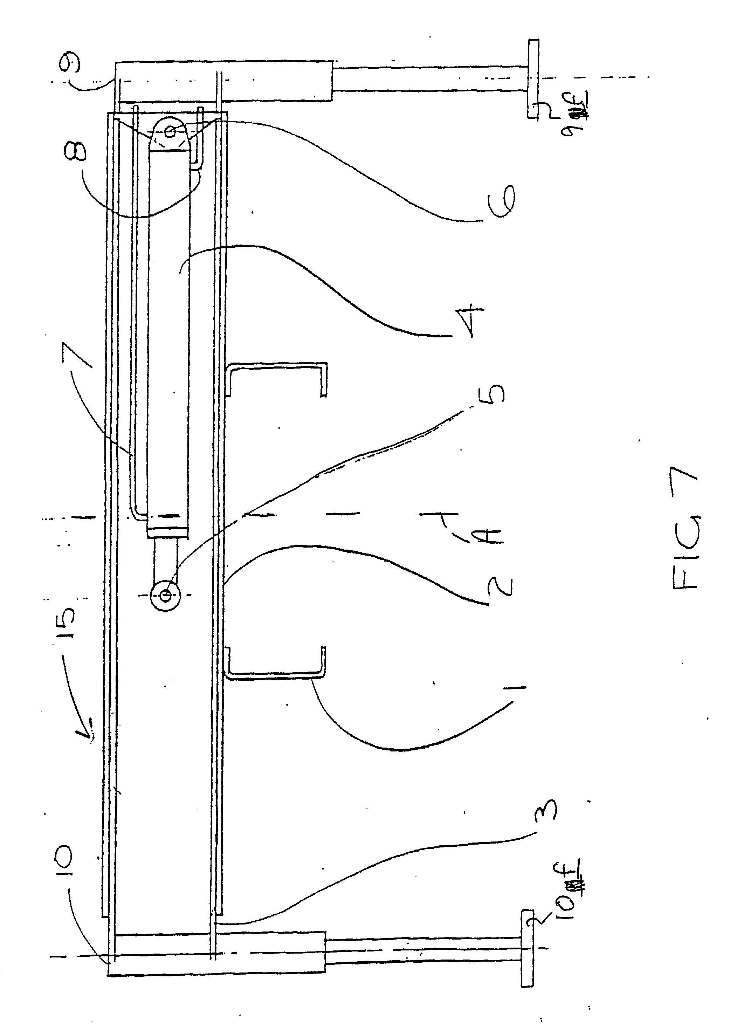

Figure 5 shows a front view of said vehicle centred upon railway track and rail running gear in position;

Figure 6 shows a front view of said vehicle with all actuators retracted/stowed and ready for rail running;

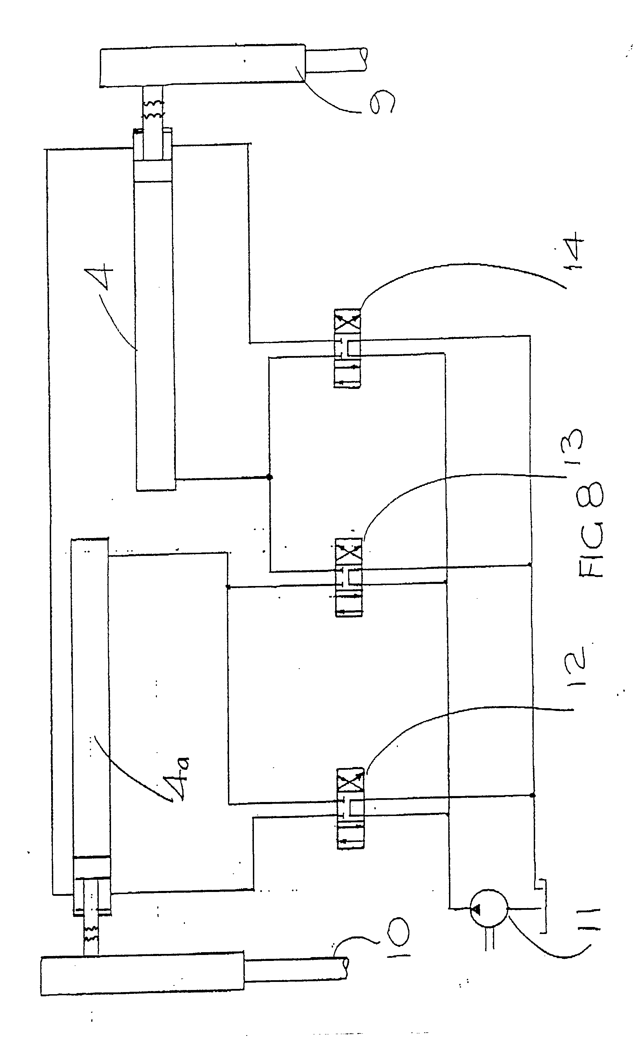

Figure 7 shows diagrammatically in part section the relationship of actuators, slideways and vehicle chassis;

Figure 8 shows schematically an interlocking hydraulic circuit for slideways.

A road/rail transport vehicle 16 has rigidly attached to its chassis 1 a series (normally 4) of slideways 15, 19, 20 each comprising an outer element 2, an inner element 3, an extension actuator 4 pivotally attached to the outer element 2 by pin means 6 and to the inner element 3 by pin means 5 each inner element 3 having rigidly attached thereto lifting actuators 9, 9a, and 10, 10a having ground engaging portions 9f, 10f.

In operation the road/rail vehicle 16 can be positioned adjacent to and parallel to a railway track 17 such that the road wheels on one side of vehicle 16 are as close as possible to a rail 18, the road wheels on the other side being between the rails 18, 21. One pair of slideways 19 and 20 on the opposite side of said vehicle from the rail 18 will be extended so that the lifting actuators 10 and 10a are free to react upon the ballast or ground beyond the far rail 21, said lifting actuators 10, 10a and 9 and 9a will be caused to lift the vehicle 16 high enough to clear the rail head whereupon all extending actuators 4 and 4a will be caused to move in order to translate the vehicle sideways and position said vehicle 16 centrally above the track and this allow a set or rail running gear 22 and 23 to be lowered and engage the track ready for on rail running. In order to obtain correct position said sideways extending actuators 4 and 4a may be operated in such a way as to induce a slight arcuate motion of vehicle 16 above the track.

Both extending and lifting actuators may be powered by any one of a number of means, e.g. hydraulic, electric or pneumatic and that all should be interlinked and controlled as described. A typical hydraulic circuit for the sideways extending actuators 4 and 4a is shown in Figure 8 wherein three similar direction control valves 12, 13 and 14 are interconnected by tubes to each other and to annulus and full area sections of actuators 4 and 4a as shown and since said direction control valves are of the close centre type, fluid is constrained to cause motion within said actuators as described.

The slideways 15, 19, 20 are arranged so that they move in directions perpendicular to a longitudinal central axial plane between the road wheels of the vehicle 16.

## Claims

1. A vehicle side shifting means comprising a series (normally four) of telescopic power operated slideways attached in pairs to the chassis of said vehicle one pair towards the rear and one pair towards the front of said vehicle such that their axes of extension are in the plane of, but perpendicular to the longitudinal axes of said chassis and their extension is outward from said chassis each of said slideways having attached at its outer end a power operated lifting actuator and at its inner end the fixation for the sideways extension actuator, said extension actuator being interlinked and controlled such that any one, any pair or any combination may be operated and actuation take place in order to cause either said slideways (with lifting actuators raised) to move out or in or (when said lifting actuators are caused to lift said vehicle) control may be so arranged to move said vehicle bodily sideways in either direction or in limited arcuate motion.

2. A vehicle side shifting means as in Claim 1 wherein the sideways and lifting actuators may be hydraulically powered and the control means be electric or electronic.

3. A vehicle side shifting means as in Claim 1 wherein the sideways and lifting actuators may be electric and their control means either electric or electronic.

4. A vehicle side shifting means as in Claims 1 to 3 wherein the control means, be it electric, hydraulic, pneumatic or any combination of these be arranged and so interlinked between sideways and vertical (lifts that extension or retraction of slideways cannot occur in an unsafe manner.

5. A vehicle characterised in that it comprises at least three support means 9, 9a, 10, 10a of which two are positioned for use at one side of a longitudinal axis A of the vehicle 16 and the other at the opposite side of the longitudinal axis A each comprising a ground engaging portion 9f, 10f mounted for movement in a first direction between a retracted position and an operative position in which it can engage the ground adjacent the vehicle, means for moving the ground engaging portion in said first direction, means 2, 3 mounting each support means 9, 9a, 10, 10a on a body portion 1 of the vehicle for movement in a second direction perpendicular to the longitudinal axis A of the vehicle and parallel with the movement of each other support means, and means 4, 4a for moving the support means 9, 9a, 10, 10a in said second direction.

6. A vehicle according to Claim 5 comprising four support means 9, 9a, 10, 10a arranged in opposite pairs 9, 10; 9a, 10a spaced apart with the centre of gravity of the vehicle between the pairs of support means.

7. A vehicle according to either one of Claims 5 and 6 comprising means 12, 14 by which the means 4, 4a for moving the vehicle in the second direction may be operated independently and means 13 by which the means 4, 4a may be operated in synchronism.

8. A vehicle according to any one of Claims 5 to 7 comprising road wheels and rail wheels 22, 23 moveable between a retracted position in which they are stored when the road wheels of the vehicle are in use and on operative position in which they can engage rails 18, 21 of a railway track and support the vehicle 16 for movement thereon with the road wheels clear of the ground.

FIG I

Turning Radius

FIG 2

FIG.3

FIG.4

FIG 5

FIG. 6

FIG. 7

EP 0 393 971 A2

FIG 8